# EUROPEAN PATENT APPLICATION

(11) **EP 4 685 381 A1**
(43) Date of publication of application: **28.01.2026**
(21) Application number: 25191107.9
(22) Date of filing: 22.07.2025
(51) Int. Cl.: F16L 59/16, F16L 41/00, F16L 39/00

(54) **TRANSFER LINE MODULE WITH INTEGRATED SENSORS**

(30) Priority: 23.07.2024 EP 24190402
(71) Applicant: Nexans, 92400 Courbevoie (FR)
(72) Inventor: GÜNZEL, Gerald, 92400 COURBEVOIE (FR); COMBESSIS, Anthony, 92400 COURBEVOIE (FR); EGERER, Ralf, 92400 COURBEVOIE (FR); DUCLOT, Yann, 92400 COURBEVOIE (FR)
(74) Representative: Cabinet Boettcher

(57) **Abstract**

A transfer line module is suggested. The transfer line module comprises a rigid multi-walled transfer line section with an inner and an outer pipe and a sensor integrated in the transfer line section. The transfer line section is connectable at both ends with a thermally insulated multi-walled transfer line comprising an inner and outer tube which are connected with the inner and outer pipe of the transfer line section, respectively. The transfer line is apt for transferring temperature sensitive fluids. The transfer line section is provided with a receptacle for the sensor, which is mounted in the receptacle. The receptacle is open towards the interior of the inner pipe such that the sensor is in direct contact with the fluid inside the inner pipe of the transfer line section.

## Description

### Field

The present disclosure relates to a transfer line module with integrated sensors for measuring state variables of a fluid flowing inside transfer line.

### Background

Global efforts for reducing carbon dioxide emissions spurred the interest in alternative energy sources such as liquefied natural gas (LNG) and liquefied hydrogen (LH2) because these energy sources may contribute to a decrease of carbon dioxide emissions and to slow down or even stop the global climate change. In the following the mentioned alternative energy sources are denominated generally as cryogenic fluids. The cryogenic fluids are typically transported in liquefied form with tankers between harbors. To this end, it is necessary to connect tanks of a tanker with a transfer line with a reservoir e.g. in a harbor where the tankers are loaded or unloaded. Transfer systems comprising a transfer line are employed to connect e.g. the tanker with a harbor installation and to perform the transfer of the fluid.

The transfer of flowable materials that can have a solid, liquid, or gaseous state of aggregation needs to be monitored to assure a secure operation of a transfer system apparently for achieving the transfer. To this end it is necessary to install sensors along the transfer line. At present, dedicated mounting fixtures are used for installing different kind of sensors in and/or on the transfer line.

Replacing defective sensors or upgrading the transfer system with additional and/or improved sensors requires a significant effort.

In view of the limitations of existing transfer lines there remains a desire for a transfer line to overcome or at least improve one or more of the problems mentioned at the outset.

In the following any kind of flowable material irrespective of its state of aggregation will be referred to as fluid including solid powders that can be pumped and flow through transfer lines like a liquid. Fluids in this sense also include aerosols and emulsions. Further, even though reference is mainly made to cryogenic fluids the present disclosure is not limited to cryogenic fluids but can be applied to any fluid in the sense mentioned above including hot fluids.

### Summary

According to a first aspect the present disclosure suggests a transfer line module comprising a rigid multi-walled transfer line section with at least an inner and an outer pipe and a sensor integrated in the transfer line section. The transfer line section is connectable at both ends with a thermally insulated multi-walled transfer line comprising at least an inner and outer tube which are connected corresponding pipes of the transfer line section, respectively. The transfer line is apt for transferring temperature sensitive fluids. The transfer line section is provided with a receptacle for the sensor, which is mounted in the receptacle. The receptacle is open towards the interior of the inner pipe such that the sensor is in direct contact with the fluid inside the inner pipe of the transfer line section.

The transfer line module can be integrated in the transfer line of a transfer system wherever it is deemed to be useful for monitoring the transfer process. The transfer line module is applicable regardless of whether the transfer line of the transfer system is composed of rigid or flexible lines or a combination of both. The form factors of the receptacles and the sensors, and more particularly the housings of the sensors are standardized to facilitate mounting and replacement of different kind of sensors. The sensors are in direct contact with the fluid passing through the transfer line module and can capture suitable for monitoring the transfer process.

In an advantageous embodiment the sensor is configured to capture at least one state variable of the fluid flowing in the transfer line. The state variable is selected from a group comprising temperature, pressure, flow velocity, and a ratio between gas and liquid. Of course, other parameters can be measured as well, in particular if the other parameters are useful for monitoring a transfer process. For instance, a warning signal can be issued if temperature, pressure, or any other state variable of the fluid falls below or exceeds a predetermined threshold value.

With advantage the transfer line section comprises a plurality of receptacles for sensors. With different kinds of sensors different state variables of a fluid in the transfer line module can be captured conveniently for monitoring the transfer process.

It has been found very useful if all receptacles for sensors have the same size and shape. In this way it is easy to replace defective sensors and the variety of accessories such as seals or a lock for securing the sensors is limited to one type of each item. That simplifies maintenance of a transfer system significantly.

Advantageously, the sensor is enclosed in a sensor housing that is adapted to the size and shape of the receptacle.

It is particularly advantageous when all sensor housings have the same form factor regardless of the type of sensor. In this way it is simple to replace defective sensors or upgrade the transfer system with improved sensors.

In a further embodiment the transfer line module further comprises a control device communicating with the sensor for processing a sensor output signal. The control device processes the sensor output signals, converts them into a display signal and may communicate sensor readings to a control room of a transfer system.

In another embodiment the control device is configured to perform monitor in parameters measured by the sensor. The control device can also issue a warning message if a sensor output signal falls below or exceeds the predetermined threshold value.

According to one embodiment the transfer line module comprises a sensor arrangement including a thermally insulated bypass conduit and a flow sensor. The bypass conduit is mounted in two receptacles in the transfer line section enabling a bypass flow of fluid transferred in the transfer line, wherein the bypass flow flows through the flow sensor.

The flow sensor is mounted in one of the adapters or somewhere along the bypass conduit. In this sense the flow sensor is mounted indirectly in the receptacles.

In this case it is useful when each terminal end of the bypass conduit is provided with an adapter that has the same form factor as the sensor housing. The adapters enable a simple mounting of the bypass conduit on the transfer line module.

With advantage the sensor housing and the adapters are designed to close the receptacle in a leak tight fashion when the sensor housing or the adapters are mounted in the receptacle.

In one embodiment the sensor housing and/or the adapters of the bypass conduit are attached with a lock to the transfer line section. The lock prevents unauthorized access to the sensors and/or the fluid transferred in the transfer line.

It has been found useful when the receptacles are thermally insulated. Thermal insulation assures that the temperature of temperature sensitive fluids inside the transfer line module remains within an acceptable temperature range.

In a further embodiment the receptacle comprises a sealing seat for receiving a seal arranged between the sealing seat and the sensor housing or the adapter. The corporation between the sealing seat, the seal, and the sensor housing/adapter facilitates closing the transfer line section of the transfer line module after the sensors have been mounted.

In a useful embodiment the sensor housing accommodates the control device that includes a communication interface to communicate with a control room.

For communication purposes the control device is provided with a wired or wireless interface to communicate with the control room where service staff monitors the operation of a transfer system. In an alternative emdiment the control device performs automatic monitoring of the transfer process including interventions in the transfer process if necessary. Not only the measured parameters are monitored by the service staff and/or the control device but also the proper functioning of the sensors.

According to a second aspect the present disclosure suggests a transfer system with a multi-walled transfer line comprising a transfer line module according to the first aspect of the present disclosure.

### Brief description of the drawings

Exemplary embodiments of the present disclosure are illustrated in the drawings and are explained in more detail in the following description. In the figures, the same or similar elements are referenced with the same or similar reference signs. It shows:
- Fig. 1: a cross-section of a transfer line module according to the present disclosure; and
- Fig. 2: a further embodiment of a transfer line module according to the present disclosure.

### Detailed description

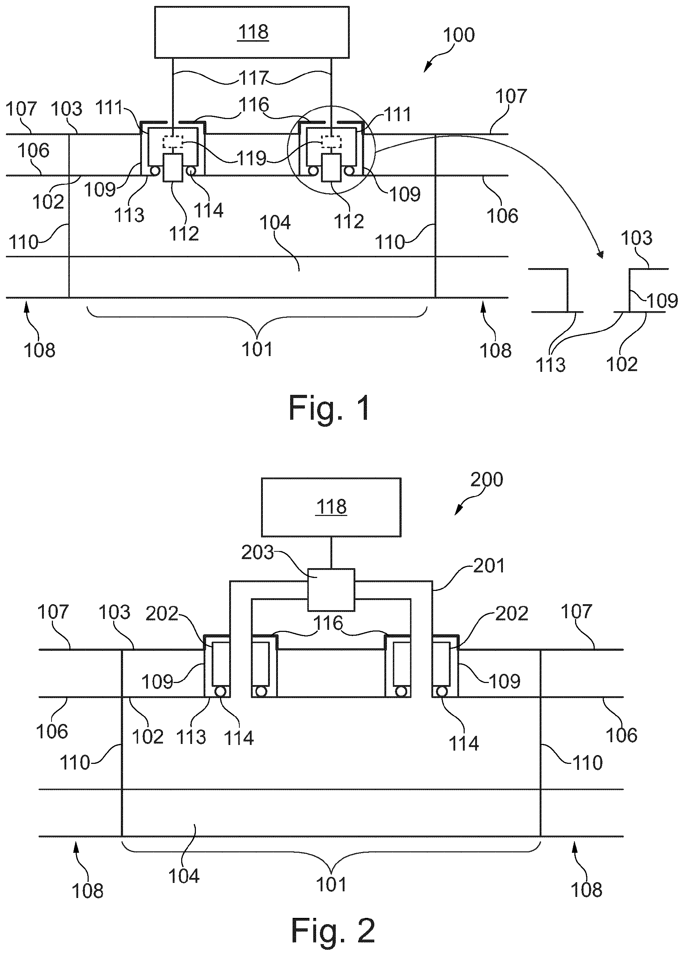

Figure 1 shows transfer line module 100 comprising a rigid double walled transfer line section 101. The transfer line section 101 comprises an inner pipe 102 and an outer pipe 103. A space 104 between the inner and outer pipe 102, 103 is evacuated to achieve thermal insulation of the inner pipe 102 from the environment. In practice, pipe 102 conducts temperature sensitive fluid, for instance cryogenic fluids. Alternatively, the space 104 is filled with thermal insulation material (not shown).

The ends of the inner and outer pipe 102, 103 are welded to an inner and outer tube 106, 107 of a transfer line 108 that belongs to a transfer system for transferring temperature sensitive fluids. Weld seams connecting the inner pipe 102 with the inner tube 106 and the outer pipe 103 with the output tube 107, respectively, are shown as line 110. Preferably, the space 104 conserves its dimensions even at the junction between the transfer line section 101 and the transfer line 108 and/or inside the transfer line section. In particular, the diameter of the inner pipe 102 is the same (for example at more or less 5% and more preferably at more or less 2%) of the diameter of the inner tube 106 and/or the diameter of the outer pipe 103 is the same (for example at more or less 2% and more preferably at more or less 1%) of the diameter of the output tube 107. Therefore, there is preferably no restriction (for example more or less than 2% and more preferably at more or less 1%) of the space 104 at the level of the transfer line section 101 and/or no major obstruction.

"Diameter" should be understood for the present application in the most general term so that the cross-section of the inner pipe 102 and/or outer pipe 103 and/or inner tube 106 and/or output tube 107 is not necessarily circular.

The transfer line section 101 is provided with at least one receptacle 109 and preferably with several receptacles 109. The receptacles 109 extend between the inner pipe 102 and the outside of the transfer line section 101. Thus it should be understood that the space 104 is not in contact with the receptacles 109. At least one of the receptacles 109 could be for example a section of pipe. Preferably, at least of the receptacle 109 is made of thermally insulating material.

At least one receptacle could accept at least one sensor housing 111. The sensor housing 111 accommodates at least one sensor 112. Thus, it should be understood that the sensor 112 is preferably not inserted directly into the receptacle 19 but is protected by the sensor housing 11 which is directly inserted into the receptacle 19. The form factor of the sensor housing 111 is preferably adapted to the form factor of the receptacle 109 to achieve a tight mounting of the sensor housing 111 in the receptacle 109. In one embodiment the receptacle 109 is provided with an internal thread and the sensor housing 111 with a corresponding thread on its outside such that it is possible to screw the sensor housing 111 into the receptacle 109.

At least least one of the receptacles 109 is preferably provided with a sealing seat 113 for a seal 114 arranged between the sealing seat 113 and the sensor housing 111. The seal 114 is for instance an O-ring. The sealing seat 113 is arranged so that the seal 114 is arranged between the inner pipe 102 and the sensor housing 111.

According to a particular embodiment, a lock 116 could lock the sensor housing 111 in the receptacle 109. Preferably, the lock 116 is arranged to that the housing 111 is locked in a firmly manner into the receptacle 109. More preferably, the lock 116 is arranged to that the lock 116 presses the housing 111 against the seal 114. This prevents unauthorized access to the sensor 112 and/ limit a risk that fluid flowing inside the transfer line module 100 could interact with the environment of the transfer line section 101. The lock 116 could be a screw cap, a bayonet catch, a bolted flange,

The present disclosure is described with reference to double-walled transfer line section 101 and a double-walled transfer line 108. However, the present disclosure is likewise applicable to multi-walled transfer line sections connected with multi-walled transfer lines.

In one embodiment of the transfer line module 100, the sensor 112 is connected with a cable 117 to an external control device 118 for supplying the sensor 112 with supply voltages and/or supply currents and for reading sensor output signals. In another embodiment the sensor housing 111 accepts besides the sensor 112 itself also a control device 119 receiving the sensor output signals. The control device 119 replaces the function of control device 118. Control device 119 is an alternative implementation and, therefore, is shown in Figure 1 with dashed lines. A wired or wireless interface of the control device 118 or 119 transmits the sensor signals to a control room where operations staff monitors and controls the transfer system.

One or several sensors 112 are configured to measure one or several state variables including, but not limited to temperature, pressure, flow velocity, and a ratio between gas and liquid.

Figure 2 illustrates an alternative embodiment of a transfer line module 200. The main difference of transfer line modules 100 and 200 is that in transfer line module 202 receptacles 109 are connected with a bypass conduit 201. The bypass conduit 201 is thermally insulated and enables the bypass flow of fluid flowing inside the inner pipe 102 of the transfer line module 200. To this end, the bypass conduit 201 is provided with adapters 202 at both ends. The adapter 202 has the same form factor as a sensor housing 111 and fits into the receptacle 109. Everything said for sensor housing 111 for embodiment illustrated figure 1 could also be applied to this adapter 202. For example, the adapter 202 can be screwed into the receptacle 109 and/or can be fixed into the receptacle 109 by a lock 116.

Other ways to fix the bypass conduit 201 in the transfer line section 101 may be conceived as long as the bypass conduit 201 is connected in a leak tight fashion to the transfer line section 101. In the bypass conduit 201 a flow sensor 203 is installed enabling measuring state variable in the flowing fluid. The flow sensor 203 is connected with a control device 118 providing supply voltages and/or supply currents and reading sensor signals.

A combination of the embodiments of the transfer line modules 100 and 200 are possible if the transfer line section 100 one of the transfer line modules 100, 200 is provided with three or more receptacles accepting the bypass conduit 201 and one or several further sensors 112.

In the claims, the word "comprising" does not exclude other elements or steps, and the indefinite article "a" does not exclude a plurality.

A single unit or device may perform the functions of multiple elements recited in the claims. The fact that individual functions and elements are recited in different dependent claims does not mean that a combination of those functions and elements could not advantageously be used.

### List of reference signs

- 100: transfer line module
- 101: transfer line section
- 102: inner pipe
- 103: outer pipe

- 106: inner tube
- 107: outer tube
- 108: transfer line
- 109: Receptacle

- 111: sensor housing
- 112: Sensor
- 113: sealing seat
- 114: Seal

- 116: lock
- 117: Cable
- 118: Control device
- 119: Control device

- 200: Transfer line module
- 201: Bypass conduit
- 202: Adapter
- 203: Flow sensor

## Claims

1. Transfer line module comprising a rigid multi-walled transfer line section (101) with at least an inner and an outer pipe (102,103) and a sensor (112) integrated in the transfer line section (101),
- wherein the transfer line section (101) is connectable at both ends with a thermally insulated multi-walled transfer line (108) comprising at least an inner and outer tube (106,107); which are connected with the corresponding pipe (102,103) of the transfer line section (101), respectively,
- wherein the transfer line (108) is apt for transferring temperature sensitive fluids,
- wherein the transfer line section (101) is provided with a receptacle (109) for the sensor (112), which is mounted in the receptacle (109),
- wherein the receptacle (109) is open towards the interior of the inner pipe (102) such that the sensor (112) is in contact with the fluid inside the inner pipe of the transfer line section (101).

2. Transfer line module according to claim 1, wherein the sensor (112) is configured to capture at least one state variable of the fluid flowing in the transfer line section (101), wherein the state variable is selected from a group comprising temperature, pressure, flow velocity, and a ratio between gas and liquid.

3. Transfer line module according to one of the preceding claims, wherein the transfer line section (101) comprises a plurality of receptacles (109) for sensors (112).

4. Transfer line module according to claim 3, wherein all receptacles (109) for sensors (112) have the same size and shape.

5. Transfer line module according to one of the preceding claims, wherein the sensor is enclosed in a sensor housing (111) that is adapted to the size and shape of the receptacle (109).

6. Transfer line module according to one of the preceding claims, further comprising a control device (118,119) communicating with the sensor (112) for processing a sensor output signal.

7. Transfer line module according to claim 6, wherein the control device (118;119) is configured to perform monitoring parameters measured by the sensor (112).

8. Transfer line module according to one of the preceding claims, wherein the transfer line module (200) comprises a sensor arrangement including a thermally insulated bypass conduit (201) and a flow sensor (203), wherein the bypass conduit (201) is mounted in two receptacles (109) in the transfer line section (101) enabling a bypass flow of fluid transferred in the transfer line, wherein the bypass flow flows through the flow sensor (203).

9. The transfer line module according to claim 8, wherein each terminal end of the bypass conduit (201) is provided with an adapter (202) that has the same form factor as the sensor housing (111).

10. Transfer line module wherein the sensor housing (111) and the adapters (202) are designed to close the receptacle (109) in a leak tight fashion when the sensor housing or the adapters are mounted in the receptacle.

11. Transfer line module according to one of 8 to 10, wherein the sensor housing (111) and/or the adapters (202) of the bypass conduit (201) are attached with a lock (116) to the transfer line section (101).

12. Transfer line module according to one of the preceding claims, wherein the receptacles (109) are thermally insulated.

13. Transfer line module according to one of the preceding claims, wherein the receptacle comprises a sealing seat (113) for receiving a seal (114) arranged between the sealing seat and the sensor housing (111) or the adapter (202).

14. Transfer line module according to one of claims 5 to 13, wherein the sensor housing (111) accommodates a control device that includes a communication interface to communicate with a control room and/or performs automatic monitoring of the transfer process.

15. Transfer system with a multi-walled transfer comprising a transfer line module according to one of the preceding claims.
